# EUROPÄISCHE PATENTSCHRIFT

(11) **EP 0 221 427 B1**
(45) Veröffentlichungstag und Bekanntmachung des Hinweises auf die Patenterteilung: **05.01.1994**
(21) Anmeldenummer: 86114497.0
(22) Anmeldetag: 20.10.1986
(51) Int. Cl.: C08B 30/04, A23J 1/12

(54) **Verfahren zur gleichzeitigen Gewinnung von Weizenstärke und Weizenkleber**
Process for the simultaneous extraction of starch and proteins from wheat
Procédé pour l'extraction simultanée d'amidon et de protéines de blé

(30) Priorität: 30.10.1985 DD 282179
(43) Veröffentlichungstag der Anmeldung: 13.05.1987
(73) Patentinhaber: Ceresan-GmbH, D-04420 Markranstädt (DE)
(72) Erfinder: Schirner, Rolf, Dr.-Ing., DDR-4090 Halle-Neustadt (DD); Nürnberger, Harald, Dr.-Ing., DDR-8020 Dresden (DD); Kalb, Helmut, Dipl.-Ing., DDR-8047 Dresden (DD); Prokop, Gunther, DDR-8020 Dresden (DD); Kopf, Dieter, DDR-4701 Oberröblingen (DD)
(74) Vertreter: Hoffmann, Klaus, Dr. rer. nat.

(56) Entgegenhaltungen:
- DD-A- 231 077
- US-A- 4 125 528
- CHEMICAL ABSTRACTS, Band 88, 1978, Seite 471, Zusammenfassung 150963x, Columbus, Ohio, US; & JP-B-77 46 296
- CHEMICAL ABSTRACTS, Band 103, Nr. 11, 16. September 1985, Seite 520, Zusammenfassung 86768m, Columbus, Ohio, US; V.I. ORLOVA et al.: "Separation of a wheat flour suspension into starch and protein fractions"

## Beschreibung

Die Erfindung betrifft die gleichzeitige Gewinnung von Weizenstärke und Weizenkleber aus trockenen Weizenmahlprodukten mittels eines Zentrifugalverfahrens.

Die Gewinnung von Weizenstärke aus wäßrigen Weizenmehlsuspensionen wurde erstmalig von A. Fesca (Otto, Fr., J.: Die Essig-, Zucker- und Stärkefabrikation: Verlag Vieweg, Braunschweig 1867, S. 502) vorgeschlagen. Der von A. Fesca dargelegte Verfahrensvorschlag beinhaltete die Herstellung einer dickflüssigen Mehl-Wasser-Mischung mit einem Rührwerk und die anschließende Zentrifugierung der Mehl-Wasser-Mischung in einer Absetzzentrifuge mit einer sieblosen Zentrifugentrommel.
Bei der chargenweisen Zentrifugierung der Mehl-Wasser-Mischung setzt sich die grobkörnige Stärke an dem inneren Umfang der massiven Trommel in einer zusammenhängenden Schicht ab, während sich darüber in dem schwer sedimentierbaren Überstand, teils in kompakter Form, teils in suspendierter Form, dar Kleber, die Feinkornstärke, Fasern und die löslichen Weizenmehlbestandteile anreichern.

Bei der Ausbildung einer kompakten Kleberschicht mußte der zähe Kleber aus der Zentrifugentrommel durch schwere und umständliche Handarbeit entfernt werden.
Da man nach dem Martin-Verfahren Feuchtkleber wesentlich einfacher gewinnen kann, hat sich das Fesca-Verfahren nicht durchgesetzt. Zur Verbesserung des Fesca-Verfahrens wurden verschiedene Vorschläge unterbreitet. Diese Vorschläge betreffen gemäß DRP 200774 die Anwendung eines Mahlauszuges, gemäß FP 529951 die Verwendung eines proteolytischen Enzyms wie Pepsin oder Trypsin. Weitere Vorschläge betreffen den Einsatz von Alkali (USP 2455981) oder Ammoniak (USP 3574180).

Die oben angeführten Verfahren verbessern die Trennbedingungen bzw. Stärkeausbeute; die Kleberkonsistenz wird jedoch so geschädigt, daß man keinen kohäsivan Feuchtkleber mehr gewinnen kann.

Bekannt sind weiterhin Untersuchungen zur Trennung von Mehl-Wasser-Gemischen mit Horizontalschneckenzentrifugen. Es wurde festgestellt (Fellers, D. A.; Johnston, H. Ph.; Smith, S.; Mossmann, A. P.; Sheperd, A. D.; Process for Protein-Starch Seperation in Wheat Flour. Food Technology 23 (1969) 4, 560 - 564; Johnston, H. Ph.; Fellers, D. A.; Process for Protein Starch Seperation in Wheat Flour, 2. Experiments with a Continuous Decanter-Type Centrifuge. Journal of Food Science 36 (1971) S. 649 - 65), daß man eine akzeptable Abtrennung der Stärke aus Mehl-Wasser-Mischungen nur in einem sehr eng begrenzten Bereich des Wasser/Mehl-Verhältnisses erreichen kann und daß das Trennverhalten sehr stark von den morphologischen Eigenschaften des Mehlklebers beeinflußt wird. Außerhalb des für jede Mehltype und -charge charakteristischen sehr engen Wasser/Mehl-Verhältnisses verschlechtern sich die Trennbedingungen drastisch. So können z. B. größere Kleberteilchen zusammen mit dem grobkornstärkehaltigen Sediment ausgetragen werden, oder im Extremfall kann sich die ganze Zentrifugentrommel mit Kleber anfüllen, so daß die eingespeiste Mehl-Wasser-Mischung weitgehend aus der Zentrifuge ungetrennt austritt.

Bekannt ist weiterhin gemäß DE-OS 2345129 ein mehrstufiges Verfahren zum Trennen von Glutan aus Weizenmahl. Bei diesem Verfahren wird eine Mehl-Wasser-Mischung mit einem Wasser/Mehl-Verhältnis von 1,2 - 2,0 hergestellt. Für die Temperatur des Anmischwassers wählt man einen Bereich von 30 - 50 °C. Die 30 - 50 °C warme Wasser-Mehl-Mischung wird in einer Zentrifuge klassierend aufgetrennt. Zur Gewinnung bzw. Abtrennung des Feuchtklebers wird das 30 - 50 °C warme Fugat dar Zentrifugatklassierung in einem großvolumigen Behälter einer Langzeitbehandlung unterzogen und danach in einer Mischvorrichtung mit Prozeßwasser intensiv mechanisch behandelt, um dadurch zusammenhängende Feuchtkleberagglomerate auszubilden. Nach Abschluß der zweistufigen Nachbehandlung werden aus den Fugat der Primärklassierung die sekundär gebildeten Feuchtkleberagglomerate durch Sieben abgetrennt und durch Frischwasserzugabe weiter ausgewaschen.

Das beschriebene Verfahren ist apparativ aufwendig durch die Langzeitbehandlung, mikrobiologisch anfällig, und es fällt noch eine relativ große Menge hochbelastetes Abwasser an.

Bekannt ist weiterhin ein mehrstufiges Zentrifugalverfahren (Stärke 32 (1980) 4, S. A 45) zur Behandlung von 30 - 50 °C warmen Mehl-Wasser-Gemischen. Typisch für dieses Verfahren ist die Verwendung eines fließfähigen Mehl-Wasser-Gemisches mit einem Wasser/Mehl-Verhältnis um 1,0 und die nacheinander erfolgende Zentrifugalbehandlung des Mehl-Wasser-Gemisches sowie des Fugats der Primärklassierung mit Dekantern. Dieses Verfahren ist apparativ sowie energetisch aufwendig und erfordert zudem zwingend den Einsatz von hochtourigen Zentrifugen mit einer Zentrifugslbeschleunigung von 3000 - 4000 g, durch die aus der hochkonsistenten Mehl-Wasser-Mischung ein trockenmassereiches sekundäres Fugat mit ausreichender Kohäsion gewonnen werden kann, das in konventionellen Kleberauswaschanlagen auswaschbar ist.

Aus Chemical Abstracts, Band 88, 1978, S. 471, Nr. 150963x (JP 77-46296) ist ein Verfahren zur Mehlfraktionierung bekannt, bei dem das Mehl in Wasser suspendiert und mittels mehrstufiger dekanterartiger Zentrifugen in Stärke, Gluten und wasserlöslichen Bestandteile fraktioniert wird.

Nachteile sind mit dem in der US 4 125 528 beschriebenen Verfahren verbunden, bei dem eine hintereinander geschaltete Zweiphasenkaskade zum Einsatz kommt.

Schließlich ist gemäß Chemical Abstracts, Band 103, Nr. 11, 1985, S. 520, Nr. 86768m (Sakh. Prom-st. 1985, (6), 54-5) ein Verfahren zur Trennung einer Weizenmehlsuspension in Stärke- und Proteinfraktionen bekannt.

Verfahrensgemäß wird das Weizenmehl in eine wässrige Suspension überführt und mittels einer Vollmantelschneckenzentrifuge fraktioniert.

Auch dieses Verfahren basiert auf einer Zwei-Phasen-Trennung.

Die Erfindung hat das Ziel, das Verfahren zur zentrifugalen Trennung von Mehl-Wasser-Mischungen apparativ zu vereinfachen, den Elektroenergie- und Frischwasserverbrauch zu senken, die Gesamttrockensubstanzausbeute zu erhöhen und von Schwankungen der Mehlqualität weitgehend unabhängig zu gestalten.

Der Erfindung liegt die Aufgabe zugrunde, eine Lösung zu finden, wodurch die Bedingungen der zentrifugalen Trennung von Mehl-Wasser-Mischungen mit dem Ziel der vollständigen Gewinnung der Weizenstärke, des Feuchtklebers und der übrigen Mehlinhaltsstoffe wesentlich verbessert werden, die Trennung wirksam auch in einem breiten Bereich für das Wasser/Mehl-Verhältnis und bei unterschiedlichen morphologischen Eigenschaften des Mehles realisiert werden kann.

Erfindungsgemäß wird die Aufgabe dadurch gelöst, daß man aus trockenen Weizenmahlprodukten und Wasser eine grobdisperse Mahlprodukt-Wasser-Mischung mit einem Wasser/Mehl-Verhältnis von 1,0 - 3,0 herstellt, die grobdisperse wässrige Mahlproduktmischung naßmechanisch, nachzerkleinernd zu einer glatten, fließfähigen Mehl-Wasser-Mischung zubereitet und auf eine Temperatur von 20 - 50 °C einstellt und unter mässigem Rühren einer Ruhephase von 5 - 120 min. unterzieht, aus der klumpenfreien Mehl-Wasser-Mischung durch eine einstufige Dreiphasen-Stromklassierung in einem zentrifugalen Trennraum mit einer Schneckenzentrifuge bei einer spezifischen Klärflächenbelastung von 0,02 - 1,45 m³ Mahlproduktsuspension pro 100 m² Klärfläche und Stunde an der Peripherie des zentrifugalen Trennraumes kontinuierlich eine schwere Fugatfraktion, die im wesentlichen aus Weizenkleber und etwas weizenstärke gebildet wird, ableitet, an der inneren Oberfläche des hohlzylindrischen Produktringes die leichte Fugatfraktion, die im wesentlichen den Hauptanteil der echt und kolloidal gelösten Mehlinhaltsstoffe und etwas feinkörnige Stärke enthält, abführt und die sedimentierte Grobkornstärke aus dem zentrifugalen Trennraum durch die Zentrifugenschnecke austrägt, aus der leichten Fugatfraktion durch Zentrifugalbehandlung die feinkörnige Stärke abtrennt und den trockenmassereichen Mehlextrakt durch thermische Konzentration zu einem Mehlextraktkonzentrat aufarbeitet, die schwere Fugatfraktion durch eine Wasserbehandlung in einer geeigneten Extraktionsanlage zu Feuchtkleber aufarbeitet, aus dem Kleberwaschwasser durch Zentrifugierung oder Schwerkraftsedimentation die Stärke abtrennt, die Sedimentfraktion durch Resuspendierung, mehrfache Siebung und Fest/Flüssig-Trennverfahren raffiniert und die behandelte grobkörnige Weizenstärke sowie die feinkörnige Weizenstärke, den Feuchtkleber und den konzentrierten Mehlextrakt in geeigneter Weise zu Trockenprodukten aufarbeitet.

Erfindungsgemäß arbeitet man das leichte Fugat zu einem thermisch konzentrierten Mehlextrakt auf. Dazu wird aus dem leichten Fugat durch eine Zentrifugalbehandlung die Feinkornstärke abgetrennt. Manerhält dadurch einen wäßrigen Mehlextrakt mit einer Trockenmasse von ca. 2,5 - 8,0 %, in Abhängigkeit von dem angewendeten Wasser/Mehl-Verhältnis und den übrigen Verfahrensbedingungen. Dieser wird durch eine thermische Behandlung in einer geeigneten Verdampferanlage auf eine Trockenmasse von 10 - 45 %, vorzugsweise 20 - 25 %, aufkonzentriert.

Erfindungsgemäß arbeitet man das schware Fugat zu einem Feuchtkleber auf. Dazu wird das schwere Fugat in eine geeignete Extraktionsanlage eingeleitet und durch eine Wasserbehandlung oder durch andere geeignete technischapparative Losungen zu einem Feuchtkleber mit hohem Proteingehalt aufgearbeitet.

Erfindungsgemäß gewinnt man aus der Sedimentfraktion nach Resuspendierung, mehrfacher Siebung und mechanischer Fest/Flüssig-Trennung eine raffinierte Grobkornstärke.

Erfindungsgemäß gewinnt man die Feinkornstärke durch Zentrifugierung des leichten flüssigen Kleberwaschwassers und unter Umständen durch Zentrifugierung des zu rezirkulierenden Prozeßwassers.

In den weiteren Ausführungen werden die Termina Mehl oder Mahlprodukte verwendet. Darunter werden die Mahlprodukte der Weizentrockenmüllerei verstanden, wie z. B. konventionell und anderweitig gemahlene Mehle, Grieß, Dunst, Feinschrot u. a. mechanisch zerkleinerte Trockenprodukte des Weizens einschließlich windgesichteter Mehle.

Das erfindungsgemäße Verfahren zeichnet sich gegenüber dem Stand der Technik durch eine Reihe von Besonderheiten und Vorteilen aus.
So ist es z. B. möglich, unter Verwendung der erfindungsgemäßen Lösung sowohl aus mehligen bis feingrießigen Mahlprodukten als auch aus backfähigen bis nichtbackfähigen Weizenmahlprodukten eine technisch-ökonomisch effektive Herstellung von Weizenstärke und Weizenkleber bei gleichzeitiger Gewinnung aller übrigen Mehlinhaltsstoffe zu sichern. Die Verwendung eines groberen Mahlprodukts, z. B. eines Feingrießes, kann bei der Suspensionszubereitung ein Vorteil sein. Auch gegenüber einer breiten Kornverteilung im Mahlprodukt mit einem hohen Anteil an Unter- und Oberkorn ist das erfindungsgemäße Verfahren tolerant. Wesentliches Element des erfindungsgemäßen Verfahrens ist die dreiphasige Trennung der Mahlprodukt-Wasser-Mischung im zentrifugalen Trennraum. Der zentrifugale Trennraum wird während des Betriebes der Zentrifuge durch den sich bildenden Produktring gebildet. Im Gegensatz zum Stand der Technik werden die Verfahrensbedingungen so gewählt, daß stationär eine permanente Entmischung der flüssigen Phase eintritt und die ebenfalls im Gegensatz zum Stand der Technik durch geeignete Ableitungsbedingungen nicht zur Auffüllung des Produktringes mit Weizenkleber, sondern durch eine zusätzliche Ableitung an der Peripherie des Trennraumes zur kontinuierlichen Gestaltung des Entmischungsvorganges führt.
Mit dem erfindungsgemäßen Verfahren wird die unter konventionellen Bedingungen gefährliche Entmischung als systematisches Vorfahrenselement determiniert angewendet. Die Verfahrensbedingungen für die Herbeiführung einer kontrollierten Entmischung der flüssigen Phase in ein leichtes Fugat, das überwiegend die echt und kolloidal gelösten Mehlinhaltsstoffe und etwas Feinkornstärke enthält und in ein schweres Fugat, das den Hauptanteil des Mehlklebers sowie etwas Fein- und Grobkornstärke enthält, sind reproduzierbar in einem Bereich dar Klärflächenbelastung von 0,02 - 1,45 m³, vorzugsweise 0,1 - 0,4 m³, Mahlprodukt-Wassersuspension pro 100 m² Klärfläche und Stunde.
Für die Realisierung des erfindungsgemäßen Verfahrens benötigt man keine Hochgeschwindigkeitsdekanter. Dekanter mit einer Zentrifugenzahl von 3000 g und 2000 g sind optimal für das Verfahren. Selbst bei kleineren Beschleunigungszahlen läßt sich das Verfahren noch stabil durchführen. Damit entfällt der Einsatz von hochtourigen Zentrifugaldekantern.
Ein besonderer Vorzug des erfindungsgemäßen Verfahrens liegt in der Beherrschung der kontrollierten Entmischung. Man kann dadurch als leichtes flüss iges Fugat ein hochkonzentriertes Prozoßabwasser gewinnen, das bei günstigen Verfahrensbedingungen eine Trockensubstanz von mehr als 4,5 % hat. Damit sind außerordentliche energie- und kostengünstige Bedingungen für die Herstellung eines thermisch aufkonzentrierten Flüssig- oder Trockenproduktes gegeben.
Mit der Entmischung der Fugatfraktion und der Bildung einer wäßrigen Phase als leichte flüssige Phase erfolgt gleichzeitig eine Anreicherung des Mehlklebers in der schweren flüssigen Phase.
Durch die im Zentrifugalfeld erzwungene stationäre Verarmung der schweren Phase an echt und kolloidal gelösten Stoffen bei gleichzeitiger Anreicherung des Mehlklebers ist die Voraussetzung für eine partielle Agglomeration des Mehlklebers aus der zuvor agglomeratfreien eingespeisten Mahlproduktsuspension. Den so partiell agglomerierten Mehlkleber kann man an der Peripherie des Zentrifugaltrennraumes bzw. von der Innenseite der Zentrifugentrommel fließfähig ableiten. Die Agglomeration des Mehlklebers ist dabei soweit fortgeschritten, daß man das schwere flüssige Fugat sofort in eine konventionelle Extraktionsanlage einspeisen und dort mit geringem Aufwand, z. B. mit rezirkuliertem Prozeßwasser, nachwaschen kann.
Bei dem erfindungsgemäßen Verfahren fällt das Prozeßwasser mit der höchsten Konzentration an Inhaltsstoffen, die bis zu 8 % betragen kann, bereits zu Beginn des Prozesses an. Das ist eine Voraussetzung, um die Stoffströme "Stärke" und "Prozeßwasser" konsequent gegenläufig zu gestalten. Es ist somit möglich, Frischwasser ausschließlich für die Stärkeraffination einzusetzen und auch für die Zubereitung der wäßrigen Mahlproduktsuspension teilweise oder ganz rezirkuliertes Prozeßwasser zu verwenden. Mit der erfindungsgemäß konsequent gegenläufigen Führung der Stoffströme ist es möglich, den spezifischen Wasserverbrauch auf weniger als 2 m³ pro t Mehlverarbeitung zu senken.

Das erfindungsgemäße Verfahren wird in einem Bereich für das Wasser/Mehl-Verhältnis von 1,0 - 3,0 durchgeführt. Das bevorzugte Wasser/Mehl-Verhältnis liegt im Bereich von 1,0 - 2,0. Aus dem bevorzugten Bereich schält sich nochmals ein optimaler Bereich mit einem Wasser/Mehl-Verhältnis 1,2 - 1,6 heraus. In dem bevorzugten Bereich erhält man eine hohe Aufkonzentrierung der löslichen Mehlinhaltsstoffe im leichten Fugat. Es können bis zu 80 % aller löslichen Mehlinhaltsstoffe in das Fugat übergehen, so daß die erfindungsgemäße einstufige Dreiphasentrennung der eingespeisten Mahlproduktsuspension mit einer regelrechten "Mehlwäsche" verbunden ist.

Als Bestandteil des erfindungsgemäßen Verfahrens kann eine spezielle Vorbereitung der Mahlproduktsuspension von Bedeutung sein.

Ein Merkmal der erfindungsgemäßen Vorbereitung ist die Einstellung einer bestimmten Temperatur der Mahlprodukt-Wasser-Mischung. Es hat sich als zweckmäßig erwiesen, die Temperatur der wäßrigen Mahlprodukt-Mischung auf eine Temperatur von 20 - 50 °C einzustellen. Der bevorzugte Bereich liegt bei 25 - 45 °C.

Ein weiteres Merkmal der erfindungsgemäßen Vorbereitung ist die Einhaltung einer kurzen Ruhepause für die erwärmte Mahlprodukt-Wasser-Mischung vor der Durchführung der dreiphasigen Stromklassierung. Während der Ruhepause wird die Mahlprodukt-Wasser-Mischung wäßrig gerührt. Die Ruhezeit liegt im Bereich von 5 - 120 Minuten. Der bevorzugte Bereich beträgt 5 - 90 Minuten.

In bezug auf die Klebergewinnung ist das erfindungsgemäße Verfahren variabel.

So ist es bei normalen Weizenqualitäten bzw. den daraus hergestellten Mahlprodukten möglich, die hauptsächlich den Mehlkleber enthaltene schwere Fugatfraktion sofort in eine konventionelle Auswaschanlage einzuleiten und in einer verkürzten Arbeitsweise zu einem Feuchtkleber mit mehr als 80 % Protein (Faktor 6,25) aufzuarbeiten.

Da der Mehlkleber nach dem erfindungsgemäßen Verfahren bereits in dar schweren Fugatfraktion partiell agglomerisiert ist, kann man die weitere Aufkonzentrierung zu einem hochproteinhaltigen Feuchtkleber auch durch ein- bis zweimalige Grobzerkleinerung und Siebung unter Wasserzugabe erreichen.

Bei schlechten Mehlqualitäten, die z. B. aus Futterweizen hergestellt wurden und die sich unter Umständen durch einen schmierigen Kleber auszeichnen, kann es vorteilhaft sein, wenn aus der schweren Fugatfraktion unter Einmischung von Mehl ein proteinangereicherter, aber an löslichen Inhaltsstoffen verarmter Knetteig hergestellt wird und der Knetteig auf einer konventionellen Auswaschanlege ausgewaschen wird.
Das erfindungsgemäße Verfahren zeichnet sich, bedingt durch verfahrenstechnische Besonderheiten und technisch unkomplizierte apparative Lösungen, durch eine hohe Verfahrensökonomie aus.
Der Verbrauch an Elektroenergie kann durch die einstufige Dekantertrennung und die stark vereinfachte Kleberaufbereitung wesentlich gesenkt werden. Infolge der günstigen gegenläufigen Stoffströme fällt praktisch kein Abwasser aus dem Prozeß an. Der im Prozeß gewonnene Mehlextrakt mit einer Trockenmasse über 4,5 % ist ein wäßriges Endprodukt. Mit einer TM 4,5 % ist jede weitere Aufarbeitung dieses Endproduktes wirtschaftlich gerechtfertigt. Es werden Gesamtausbeuten an eingesetzter Mehltrockenmasse bis zu 98 % erreicht.

Nachfolgend soll die Erfindung durch Ausführungsbeispiele näher erklärt werden.

In den dazugehörigen Zeichnungen zeigen:

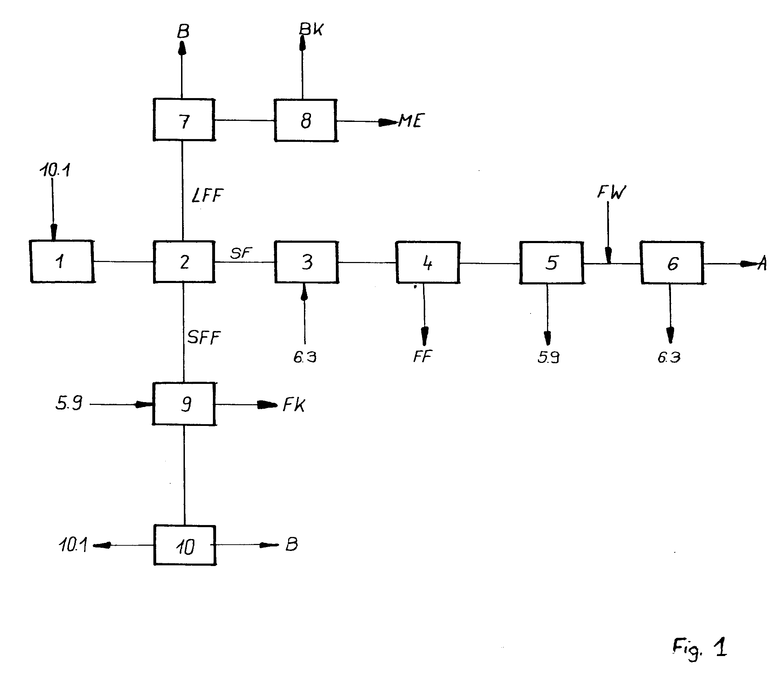

- Fig. 1:: ein Blockschaltbild des Verfahrens zur Gewinnung von Weizenstärke und Weizenkleber durch dreiphasige Stromklassierung im Zentrifugalfeld;

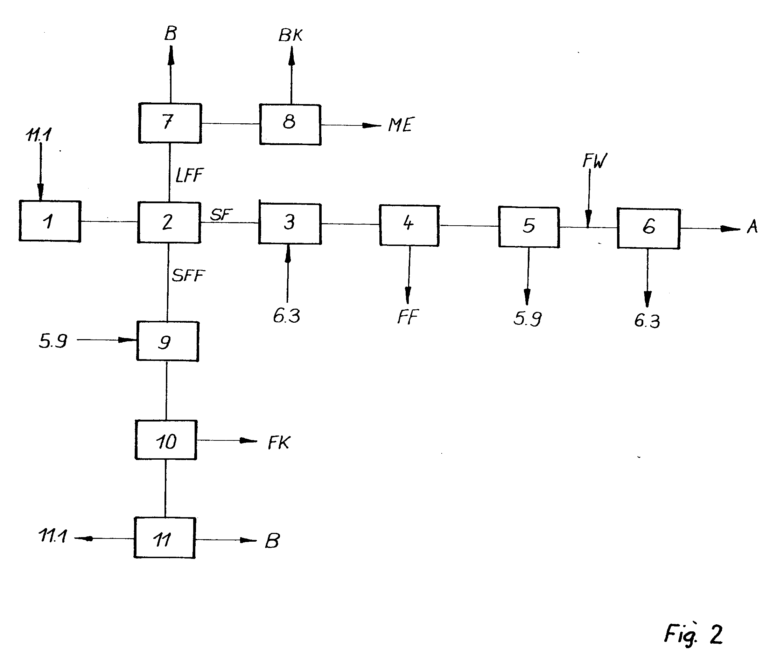

- Fig. 2:: ein Blockschaltbild des Verfahrens zur Gewinnung von Weizenstärke und Weizenkleber durch einstufige Dreiphasentrennung der wäßrigen Mahlproduktsuspension und siebklassierende Aufbereitung der schweren Fugatfraktion;

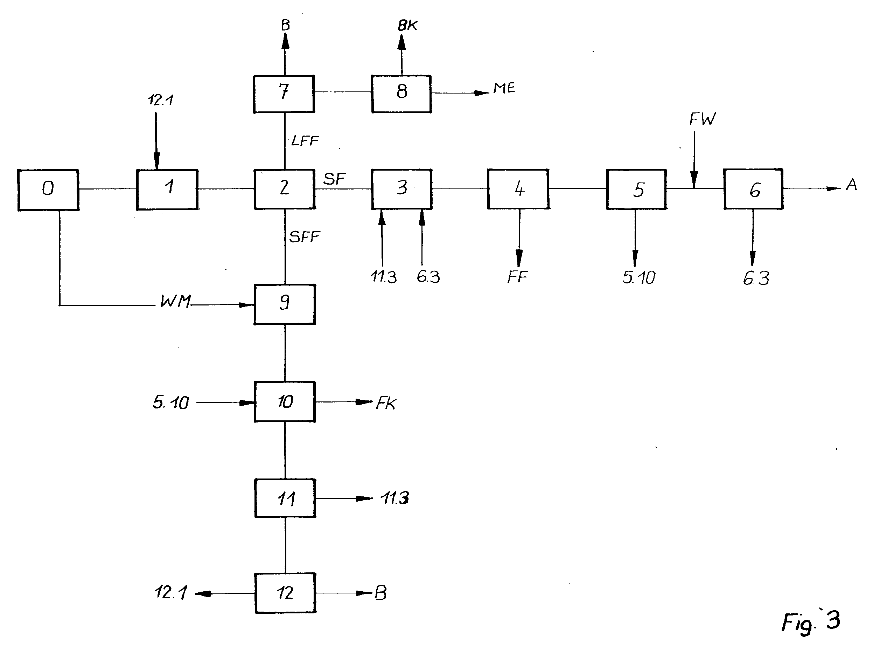

- Fig. 3:: ein Blockschaltbild das Verfahrens zur Gewinnung von Weizenstärke und Weizenkleber durch einstufige Dreiphasentrennung der wäßrigen Mahlproduktsuspension und nachfolgender Kompaktierung der schweren Fugatfraktion durch Zumischung einer kleinen Menge Mehl in die schwere Fugatfraktion und Extraktion der nachbehandelten schweren Fugatfraktion in einer konventionellen Abwasseranlage.

### Beispiel 1: Herstellung von Weizengrobkorn- und Weizenfeinkornstärke, Feuchtkleber und flüssigem Mehlextrakt aus einem Futterweizenmehl (Blockschaltbild 1)

Für die Bereitung einer zentrifugal trennbaren Mahlprodukt-Wasser-Mischung 1 wird Weizenmehl einer nichtbackfähigen Weizensorte mit rezirkuliertem Prozeßwasser 10.1 mit einer Temperatur von 35 °C zu einer grobdispersen Mehl-Wasser-Mischung vereinigt und mit einer Zahnscheibenmühle nachbehandelt. Man erhält so eine glatte, klumpenfreie, gut fließfähige Mehl-Wasser-Mischung 1, die ein Wasser/Mehl-Verhältnis von 1,6 kg Wasser auf 1,0 kg Mehl aufweist.

In Durchführung der dreiphasigen Trennung der wäßrigen Mehlsuspension durch Stromklassierung im Zentrifugalfeld werden 2,4 m³/h Mehlsuspension in einem zur Durchführung der erfindungsgemäßen Trennung speziell vorbereiteten Langrohrdekanter mit einem Trommeldurchmesser von 500 mm, einem Schlankheitsgrad π = 2,7 und einem maximalen Trennfaktor von 1950 g eingespeist.

Bei der erfindungsgemäßen Dreiphasenstromklassierung 2 im Zentrifugalfeld erhält man
- eine Sedimentfraktion SF, vorrangig aus Grobkornstärke A bestehend,
- eine schwere Fugatfraktion SFF, vorrangig aus Kleber FK sowie Feinkornstärke B bestehend,
- eine leichte Fugatfraktion LFF, vorrangig aus den wäßrig gelösten Mehlinhaltsstoffen und etwas Feinkornstärke B bestehend.

Die Sedimentfraktion mit einem Proteingehalt von 0,95 % wird mit rezirkuliertem Prozeßwasser 6.3 resuspendiert 3 und zweimal gesiebt 4. Die von Kleie und Feinfasern FF befreite, gesiebte Rohstärkemilch wird durch einen Dekanter 5 entwässert. Die entwässerte Weizenstärke wird mit Frischwasser FW erneut resuspendiert und in einem zellenlosen Drehfilter 6 entwässert. Die raffinierte grobkörnige Weizenstärke A hat einen Proteingehalt von 0,48 %.

Die schwere Fugatfraktion SFF wird auf einer konventionellen Extraktionsanlage 9 ausgewaschen. Als Kleberwaschwasser wird rezirkuliertes, nur geringfügig belastetes Prozeßwasser 5.9 verwendet. Man erhält nach der Wasserbehandlung einen konzentrierten Feuchtkleber FK mit einem Proteingehalt von 82 % und ein feinkornstärkehaltiges Waschwasser. Die aus der Extraktionsanlage abfließende dünne Stärkesuspension wird zur Abtrennung der Stärke zentrifugiert 10. Die Feinkornstärke B weist einen Proteingehalt von 2,8 % auf.
Die Grobkornstärke A und die Feinkornstärke B können durch die üblichen Trocknungsverfahren der Strom-, Mahl- oder Walzentrocknung in Trockenprodukte übergeführt werden.

Aus der leichten Fugatfraktion LFF wird die darin befindliche Feinkornstärke B durch Behandlung in einem Schnelldekanter 7 abgetrennt und mit einer aus der schweren Fugatfraktion SFF durch Auswaschung gewonnenen Feinkornstärke B vereinigt.

Der wäßrige Mehlextrakt mit einem Trockensubstanzgehalt von 4,35 % wird durch Eindampfen mit einer mehrstufigen Fallstromverdampferanlege 8 zu einem thermisch konzentrierten Mehlextrakt ME mit einer Trockensubstanz von 25 % und einem Proteingehalt von 21,4 % in der Trockensubstanz aufgearbeitet.

Bei der Durchführung des erfindungsgemäßen Verfahrens gemäß Beispiel 1 erhält man, bezogen auf Weizenmehl, 57 % Grobkornstärke A mit 14 % Wasser, 20 % Feinkornstärke B mit 14 % Wasser, 35 % Feuchtkleber FK und 31 % flüssigen Mehlextrakt ME.

### Beispiel 2: Herstellung von Weizengrobkorn- und Feinkornstärke, Feuchtkleber und flüssigem Mehlextrakt aus Winterweizenmehl (Blockschaltbild 2)

Für die Zubereitung einer zentrifugal trennbaren Mehl-Wasser-Mischung 1 wird Weizenmehl mit rezirkuliertem Prozeßwasser 11.1 zu einer grobdispersen Mahlprodukt-Wasser-Mischung vereinigt und mit einer Zahnscheibenmühle mechanisch nachzorkleinert. Man erhält so eine glatte, klumpenfreie, gut fließfähige Mehl-Wasser-Mischung 1, die ein Wasser/Mehl-Verhältnis von 1,6 kg Wasser auf 1,0 kg Mehl aufweist.

In Durchführung der dreiphasigen Trennung der wäßrigen Mehlsuspension durch Stromklassierung im Zentrifugalfeld werden 2,4 m³/h Mehlsuspension in einem zur Durchführung der erfindungsgemäßen Trennung speziell vorbereiteten Langrohrdekanter mit einem Trommeldurchmesser von 500 mm und einem Schlankheitsgrad π = 2,7 eingespeist.

Bei der erfindungsgemäßen Dreiphasenstromklassierung 2 im Zentrifugalfeld erhält man
- eine Sedimentfraktion SF, vorrangig aus Grobkornstärke A bestehend,
- eine schwere Fugatfraktion SFF, vorrangig aus Kleber FK sowie Feinkornstärke B bestehend,
- eine leichte Fugatfraktion LFF, vorrangig aus den wäßrig gelösten Mehlinhaltsstoffen und etwas Feinkornstärke B bestehend.

Die Sedimentfraktion wird mit rezirkuliertem Prozeßwasser 6.3 resuspendiert 3 und zweimal gesiebt 4.Die von Kleie und Feinfasern FF befreite, gesiebte Rohstärkemilch wird durch einen Dekanter 5 entwässert. Die entwässerte Weizenstärke wird mit Frischwasser FW erneut resuspendiert und mit einem zellenlosen Drehfilter 6 entwässert. Die raffinierte grobkörnige Weizenstärke A hat einen Proteingehalt von 0,3 %.

Die schwere Fugatfraktion SFF wird unter Prozeßwasserzugabe 5.9 mechanisch dispergiert 9 und das heterogene Gemisch aus suspendierter Stärke und Kleberteilchen einer Siebklassierung 10 mit einem Bogensieb unterzogen. Der Kleber FK fällt dabei als Siebüberschlag an. Im Siebdurchgang befindet sich die suspendierte Feinkornstärke B. Der Siebüberschlag wird zur weiteren Aufkonzentrierung des Klebergehaltes in rezirkuliertem Prozeßwasser nochmals mechanisch dispergiert und noch einmal gesiebt. Der Feuchtkleber kann danach getrocknet oder anderweitig verarbeitet werden. Der Siebdurchgang wird zentrifugiert - 11 -, so daß man ein rezirkulierfähiges Prozeßwasser 11.1 erhält.

Die leichte Fugatfraktion LFF, die den Hauptanteil der löslichen Mehlinhaltsstoffe enthält, wird durch Zentrifugierung 7 von der feinkörnigen Stärke B befreit. Das trockenmassereiche Prozeßwasser wird mit einer mehrstufigen Fallstromverdampferanlage 8 bis auf eine TS von 25 % eingedampft.

Bei der Durchführung des erfindungsgemäßen Verfahrens gemäß Beispiel 2 erhält man 56 % Grobkornstärke A, 18 % Feinkornstärke B, 40 % Feuchtkleber FK und 35 % Mehlextrakt ME, bezogen auf Weizenmehl.

### Beispiel 3: Herstellung von Weizengrob- und -feinkornstärke, Feuchtkleber und flüssigem Mehlextrakt aus einem Futterweizenmehl (Blockschaltbild 3)

Für die Bereitung einer zentrifugal trennbaren Mahlprodukt-Wasser-Mischung 1 wird Weizenmehl einer nichtbeckfähigen Weizensorte mit der 1,4fachen Menge an rezirkuliertem Prozeßwasser 12.1 mit einer Temperatur von 25 °C zu einer grobdispersen Mehlaufschlämmung vereinigt und mit einer Zahnscheibenmühle mechanisch nachzerkleinert. Man erhält so eine glatte, gut fließfähige Mehlsuspension.

In Durchführung der dreiphasigen Trennung der wäßrigen Mehlsuspension durch Stromklassierung im Zentrifugalfeld werden 2,2 m³/h Mehlsuspension in einem zur Durchführung der erfindungsgemäßen Trennung speziell vorbereiteten Langrohrdekanter mit einem Trommeldurchmesser von 500 mm und einem Schlankheitsgrad π = 2,7 eingespeist.

Bei der erfindungsgemäßen Dreiphasenstromklassierung 2 im Zentrifugalfeld erhält man
- eine Sedimentfraktion SF, vorrangig aus Grobkornstärke A bestehend,
- eine schwere Fugatfraktion SFF, vorrangig aus Kleber FK sowie Feinkornstärke B bestehend,
- eine leichte Fugatfraktion LFF, vorrangig aus den wäßrig gelösten Mehlinhaltsstoffen und etwas Feinkornstärke B bestehend.

Die Sedimentfraktion wird mit rezirkuliertem Prozeßwasser 6.3 resuspendiert 3 und gesiebt 4. Die gesiebte Rohstärkemilch wird durch einen Dekanter 5 entwässert. Die entwässerte weizenstärke wird mit Frischwasser FW erneut resuspendiert und mit einem zellenlosen Drehfilter 6 entwässert.

Die schwere Fugatfraktion SFF wird in einem Kneter mit 650 kg/h Weizenmehl aus der Mehlbevorratung 0 innig gemischt und so ein proteinangereicherter Knetteig 9 hergestellt. Der Knetteig wird anschließend, unter Zugabe von Prozeßwasser 5.10, in einer konventionellen Auswaschanlage 10 in Feuchtkleber FK und Stärkemilch getrennt. Aus der Stärkemilch wird mittels Dekanter 11 die enthaltene Grobkornstärke A separiert und gemeinsam mit der Sedimentfraktion SF aus der Dreiphasentrennung weiter aufgearbeitet.
Die nach Abtrennung der Grobkornstärke A nur noch Feinkornstärke B enthaltende Stärksmilch wird wiederum zentrifugiert -12-, um die Feinkornstärke B aufzukonzentrieren.

Aus der leichten Fugatfraktion LFF wird die darin befindliche feinkörnige Stärke B durch Zentrifugieren 7 abgetrennt und mit der Feinkornstärke B aus der Knetteigauswaschung vereinigt.

Das trockenmassereiche Prozeßwasser aus der Zentrifugierung der leichten Fugatfraktion LFF wird durch Eindampfen mit einer mehrstufigen Fallstromverdampferanlage 8 zu einem flüssigen konzentrierten Mehlextrakt ME aufgearbeitet.
Man erhält nach dieser Vorfahrensweise, bezogen auf Weizenmehl, 60 % Grobkornstärke A mit 14 % Wasser, 18 % Feinkornstärke B mit 14 % Wasser, 36 % Feuchtkleber FK und 32 % Mehlextrakt ME mit 25 % Trockensubstanz.

## Patentansprüche

1. Verfahren zur gleichzeitigen Gewinnung von Weizenstärke und Weizenkleber, dadurch gekennzeichnet, daß man aus trockenen Weizenmahlprodukten und Wasser eine grobdisperse Mahlprodukt-Wasser-Mischung mit einem Wasser/Mehl-Verhältnis von 1,0 - 3,0 herstellt, die grobdisperse wässrige Mahlproduktmischung naßmechanisch, nachzerkleinernd zu einer glatten, fließfähigen Mehl-Wasser-Mischung zubereitet und auf eine Temperatur von 20 - 50 °C einstellt und unter mässigem Rühren einer Ruhephase von 5 - 120 min. unterzieht, aus der klumpenfreien Mehl-Wasser-Mischung durch eine einstufige Dreiphasen-Stromklassierung in einem zentrifugalen Trennraum mit einer Schneckenzentrifuge bei einer spezifischen Klärflächenbelastung von 0,02 - 1,45 m³ Mahlproduktsuspension pro 100 m² Klärfläche und Stunde an der Peripherie des zentrifugalen Trennraumes kontinuierlich eine schwere Fugatfraktion, die im wesentlichen aus Weizenkleber und etwas Weizenstärke gebildet wird, ableitet, an der inneren Oberfläche des hohlzylindrischen Produktringes die leichte Fugatfraktion, die im wesentlichen den Hauptanteil der echt und kolloidal gelösten Mehlinhaltsstoffe und etwas feinkörnige Stärke enthält, abführt und die sedimentierte Grobkornstärke aus dem zentrifugalen Trennraum durch die Zentrifugenschnecke austrägt, aus der leichten Fugatfraktion durch Zentrifugalbehandlung die feinkörnige Stärke abtrennt und den trockenmassereichen Mehlextrakt durch thermische Konzentration zu einem Mehlextraktkonzentrat aufarbeitet, die schwere Fugatfraktion durch eine Wasserbehandlung in einer geeigneten Extraktionsanlage zu Feuchtkleber aufarbeitet, aus dem Kleberwaschwasser durch Zentrifugierung oder Schwerkraftsedimentation die Stärke abtrennt, die Sedimentfraktion durch Resuspendierung, mehrfache Siebung und Fest/Flüssig-Trennverfahren raffiniert und die behandelte grobkörnige Weizenstärke sowie die feinkörnige Weizenstärke, den Feuchtkleber und den konzentrierten Mehlextrakt in geeigneter Weise zu Trockenprodukten aufarbeitet.

2. Verfahren nach Anspruch 1, dadurch gekennzeichnet, daß man die schwere Fugatfraktion mit Frischwasser oder rezirkuliertem Prozeßwasser aufnimmt und in einer mechanischen Zerkleinerungseinrichtung dispergiert, dadurch den Mehlkleber zu Klebergerinnsel, -flocken oder -strängen ausbildet, den Kleber von den übrigen suspendierten oder gelösten Stoffen durch Siebung abtrennt und je nach gewünschtem Proteingehalt des Feuchtklebers die mechanische Zerteilrung und Siebung zur Abtrennung der Nichtproteinbestandteile im Feuchtkleber nochmals wiederholt.

3. Verfahren nach Anspruch 1, dadurch gekennzeichnet, daß man in die schwere Fugatfraktion durch eine geeignete mechanische Vorrichtung Mehl einmischt und den so hergestellten proteinangereicherten Knetteig auf einer konventionellen Auswaschanlage auswäscht.

4. Verfahren nach Anspruch 1, dadurch gekennzeichnet, daß man das Wasser/Mehl-Verhältnis der grobdispersen Mahlprodukt-Wasser-Mischung auf einen Wert von 1,0 bis 2,0 einstellt.

5. Verfahren nach Anspruch 1, dadurch gekennzeichnet, daß man die Temperatur der glatten, fließfähigen Mehl-Wasser-Mischung auf einen Bereich von 25-45°C einstellt.

6. Verfahren nach Anspruch 1, dadurch gekennzeichnet, daß man die glatte, fließfähige Mehl-Wasser-Mischung unter mässigen Rühren einer Ruhephase von 10-90 min. unterzieht.

7. Verfahren nach Anspruch 1, dadurch gekennzeichnet, daß die spezifische Klärflächenbelastung 0,1 bis 0,4 m³ Mahlproduktsuspension pro 100 m² Klärfläche und Stunde beträgt.

## Claims

1. Process for simultaneous recovery of wheat starch and wheat gluten, characterised in that a coarsely dispersed milled product-water mixture having a water-flour ratio of 1.0 - 3.0 is prepared from dry wheat milled products and water, the coarsely dispersed aqueous milled product mixture is prepared by wet-milling and comminuting to form a smooth, flowable flour-water mixture and a temperature of 20 - 50°C is set and the mixture is subjected to a resting phase of 5 - 120 minutes with moderate stirring, a heavy centrifugate fraction, which is essentially formed from wheat gluten and some wheat starch, is continuously derived from the lump-free flour-water mixture by means of single-step three-phase stream sizing in a centrifugal separating chamber using a screw centrifuge at a specific clarifying surface load of 0.02 - 1.45 m³ of milled product suspension per 100 m² of clarifying surface and hour at the periphery of the centrifugal separating chamber, the light centrifugate fraction, which essentially contains the main portion of the true and colloidally dissolved flour constituents and some fine-grain starch, is removed at the inner surface of the hollow cylindrical product ring and the deposited coarse-grain starch is discharged from the centrifugal separating chamber by means of the centrifuge screw, the fine-grain starch is separated off from the light centrifugate fraction by means of centrifugal treatment, and the flour extract rich in dry solids is worked up to form a flour extract concentrate by means of thermal concentration, the heavy centrifugate fraction is worked up to form moist gluten by means of water treatment in a suitable extraction plant, the starch is separated off from the gluten washing water by means of centrifuging or gravitational sedimentation, the sediment fraction is refined by resuspending, multiple sieving and solid/liquid separation processes, and the treated coarse-grain wheat starch as well as the fine-grain wheat starch, the moist gluten and the concentrated flour extract is worked up in suitable manner to form dry products.

2. Process according to claim 1, characterised in that the heavy centrifugate fraction is taken up using fresh water or recirculated process water and dispersed in a mechanical comminuting device, so that the flour gluten forms gluten agglomerates, flakes or strands, the gluten is separated off from the other suspended or dissolved materials by sieving, and depending on the protein content of the moist gluten required, the mechanical division and sieving is repeated again to separate off the non-protein constituents in the moist gluten.

3. Process according to claim 1, characterised in that flour is mixed into the heavy centrifugate fraction by means of a suitable mechanical device and the protein-enriched dough thus prepared is rinsed in a conventional rinsing plant.

4. Process according to claim 1, characterised in that the flour/water ratio of the coarsely dispersed milled product-water mixture is set at a value from 1.0 to 2.0.

5. Process according to claim 1, characterised in that the temperature of the smooth, flowable flour-water mixture is set at a range from 25-45°C.

6. Process according to claim 1, characterised in that the smooth, flowable flour-water mixture is subjected to a resting phase from 10-90 minutes with moderate stirring.

7. Process according to claim 1, characterised in that the specific clarifying surface load is 0.1 to 0.4 m³ of milled product suspension per 100 m² of clarifying surface and hour.

## Revendications

1. Procédé d'extraction simultanée d'amidon et de gluten de blé, caractérisé en ce que l'on prépare à partir de produits secs à base de farine de blé et d'eau un mélange farine-eau à dispersion grossière, avec un rapport eau/farine allant de 1,0 à 3,0, le mélange de produits farineux aqueux à dispersion grossière étant amené, par voie mécanique humide, accompagnée d'un broyage ultérieur, a former un mélange farine-eau fluide lisse et porté à une température de 20 à 50° C et soumis à une agitation modérée lors d'une phase de repos, durant de 5 à 120 minutes, à partir de laquelle le mélange farine-eau exempt de grumeau est soumis à un criblage hydraulique à trois phases, en une étape, dans une enceinte de séparation centrifuge, avec une centrifugeuse à vis, avec une sollicitation de la surface de décantation spécifique allant de 0,02 à 1,45 m³ de suspension de produit farineux par 100 m² de surface de décantation et par heure, à la périphérie de l'enceinte de séparation centrifuge, une fraction de séparation lourde étant dérivée en continu, constituée essentiellement de gluten de blé et d'un peu d'amidon, tandis que, sur la surface intérieure de l'anneau de produit cylindrique creux, la fraction de séparation légère, qui contient essentiellement la partie principale des substances proprement-dites contenues dans la farine, dissoutes et se trouvant à l'état colloïdal et un peu d'amidon à granulométrie fine, est évacuée et l'amidon à granulométrie grossière s'étant sédimentée étant extrait de l'enceinte de séparation centrifuge au moyen de la vis centrifuge, d'où la fraction de séparation légère est séparée de l'amidon à granulométrie fine par un traitement centrifuge et l'extrait de farine riche en masse sèche étant traité par concentration thermique, pour donner un concentré d'extrait de farine, la fraction de séparation lourde étant traitée par un traitement à l'eau dans un installation d'extraction appropriée pour donner le gluten humide, l'amidon étant obtenu par séparation depuis l'eau de lavage du gluten, par centrifugation ou par sédimentation par gravité, la fraction de sédimentation étant raffinée par remise en suspension, tamisages multiples et un procédé de séparation solide/liquide et l'amidon à granulométrie grossière traité ainsi que l'amidon à granulométrie fine, le gluten humide et l'extrait de farine concentré étant préparés ce manière appropriée peur donner des produits secs.

2. Procédé selon la revendication 1, caractérisé en ce que l'on récupère la fraction de séparation lourde avec de l'eau neuve ou de l'eau de processus recirculée et en la disperse, dans un dispositif de broyage mécanique, faisant que les gluten sent transformées en matières coagulées, en flocons, eu en tronçons de gluten, le gluten étant séparé du reste des substances en suspension ou dissoures par tamisage et, selon la teneur en gluten souhaitée du gluten humide, on répète encore plusieurs fois le broyage mécanique et le tamisage de séparation des composants non protéiques dans le gluten humide.

3. Procédé selon la revendication 1, caractérisé en ce que l'on mélange dans la séparation la fraction de séparation lourde, au moyen d'un dispositif approprié, de la farine et l'on lave la patte de pétrissage enrichie en protéines ainsi préparée sur une installation de lavage classique.

4. Procédé selon la revendication 1, caractérisé en ce que l'on établi le rapport farine/eau du mélange produit farineux-eau à dispersion grossière pour atteindre une valeur allant de 1,0 à 2,0

5. Procédé selon la revendication 1, caractérisé en ce que l'on règle la température du mélange farine-eau fluide, lisse, dans une place allant de 25 à 45°c

6. Procédé selon la revendication 1, caractérisé en ce que l'on soumet le mélange farine-eau fluide lisse, avec une agitation modérée, à une phase de repos allant de 10 à 90 minutes

7. Procédé selon la revendication 1, caractérisé en ce que la sollicitation par surface de clarification spécifique est de 0,1 à 0,4 m³ de suspension de produit farineux par 100 m³ de surface de clarification et par heure.
